(19) **Europäisches Patentamt**

**European Patent Office**

**Office européen des brevets**

(11) **EP 1 434 198 B1**

(12) **EUROPEAN PATENT SPECIFICATION**

(45) Date of publication and mention
of the grant of the patent:
**13.09.2006 Bulletin 2006/37**

(51) Int Cl.:
**G11B 5/66** (2006.01)

(21) Application number: **03028580.3**

(22) Date of filing: **11.12.2003**

(54) **Magnetic recording medium**

Magnetisches Aufzeichnungsmittel

Moyen d' enregistrement magnétique

(84) Designated Contracting States:
**DE FR GB**

(30) Priority: **25.12.2002 JP 2002375122**

(43) Date of publication of application:
**30.06.2004 Bulletin 2004/27**

(73) Proprietor: **SONY CORPORATION**
**Tokyo (JP)**

(72) Inventor: **Motohashi, Kazunari**
**Tokyo (JP)**

(74) Representative: **Müller - Hoffmann & Partner**
**Patentanwälte,**
**Innere Wiener Strasse 17**
**81667 München (DE)**

(56) References cited:
**EP-A- 0 516 086**     **JP-A- 2001 143 236**
**US-A- 5 686 177**     **US-A1- 2002 168 550**

EP 1 434 198 B1

**Description**

CROSS REFERENCE TO RELATED APPLICATIONS

The present document claims priority to Japanese Priority Document JP 2002-375122, filed in the Japanese Patent Office on December 25, 2002.

BACKGROUND OF THE INVENTION

1. Field of the Invention

The present invention relates to a high density magnetic recording medium, and especially to a magnetic recording medium from which signals are reproduced in a so-called linear magnetic recording tape system in which recording is carried out by moving a magnetic head in both directions longitudinally with respect to a magnetic tape using a magnetoresistive head (MR head) or a giant magnetoresistive head (GMR head).

2. Description of the Related Art

In recent years, as magnetic recording media in such fields as video tape recorders and the like, in order to achieve higher picture quality and recording density, so-called metal thin film magnetic recording media are used. These metal thin film magnetic recording media have a configuration in which a magnetic layer is formed directly on a non-magnetic substrate by depositing, through vacuum thin film forming techniques, some magnetic material such as a magnetic metal material, a Co-Ni alloy, a Co-Cr alloy, a Co-CoO metal oxide and the like.

Further, in order to improve the electromagnetic conversion characteristics of such magnetic recording media and to obtain larger output, so called oblique evaporation in which a magnetic layer is deposited obliquely in forming the magnetic layer of a magnetic recording medium is used. And recording media whose magnetic layer is formed by this method are put to practical use as evaporated tapes for high-end 8mm video tape recorders and for digital video tape recorders.

The metal thin film magnetic recording media described above, due to their superior coercivity and squareness ratio, and to the fact that the magnetic layer can be formed extremely thin, are superior in terms of their electromagnetic conversion characteristics at short wavelengths, and recording demagnetization and thickness loss during reproduction are extremely small. In addition, unlike so-called coated type magnetic recording media in which a magnetic layer is formed by applying a magnetic coating, in which magnetic powder is dispersed in a binder, onto a non-magnetic substrate, since a binder, which is a non-magnetic material, is not mixed into the magnetic layer, the filling density of a ferromagnetic metal material is increased, and it is advantageous in increasing recording density.

In addition, obliquely evaporated magnetic tapes are made through a method in which, for example, a tape shaped non-magnetic substrate is run in its longitudinal direction, and a magnetic layer is formed by depositing a magnetic material on one principal side of the non-magnetic substrate while being run. High productivity and good magnetic properties can be achieved with such magnetic tapes.

On the other hand, along with a rise in the demand for magnetic recording media, such as magnetic tapes, as data streamers, a higher recording density for magnetic recording media is being demanded. Further, as a magnetic head for reproducing recorded information, magnetoresistive heads (MR heads) or giant magnetoresistive heads (GMR heads) are starting to be used in place of conventional inductive heads. Since MR heads and GMR heads are able to detect very weak magnetic flux leakage from the magnetic layer with high sensitivity, they are effective in improving recording density.

MR heads and GMR heads have a detection limit where their sensitivity to magnetic flux leakage saturates, and are therefore unable to detect magnetic flux leakage that is greater than what they are designed for. Therefore, there is a need to optimize the sensitivity to magnetic flux leakage by making the magnetic layer of the magnetic recording medium thinner.

Two types of magnetic tape recording/reproducing systems as data streamers are put to practical use: the helical scan system and the linear system. The helical scan system is a system in which recording and reproducing are carried out by having a magnetic head provided on a rotary drum scan over a magnetic tape by rotating at high speed.

A characteristic of the helical scan system is that not only can record tracks be recorded with precision, but carrying out control such that the recorded tracks can be scanned accurately upon reproduction is also physically possible, and it is possible to achieve high density recording in a magnetic tape system. The helical scan system is used widely in home video recording apparatuses such as VHS, in high band 8mm video tape recorders, and in digital video tape recorders.

On the other hand, the linear system is a system in which tracks are provided in the longitudinal direction of the magnetic tape, and recording is performed in the longitudinal direction. It is easy to run the tape at high speed, while at the same time it is possible to improve the recording/reproducing transfer rate by providing a number of magnetic heads in parallel.

Although the helical scan system, which is capable of achieving high density recording, is advantageous for use in magnetic recording tape systems for camcorders, for purposes of data storage which has fewer constraints in terms of the volume of the magnetic recording tape system, the linear system above is used widely, and such products as DLTs (Digital Linear Tapes) and LTO (Linear Tape-Open) are mainstream in the market.

As magnetic tape media for data storage use in linear systems, only coated type magnetic tapes are used, and oblique evaporated magnetic tape media have not been used. This is because in the helical scan system, the relative movements of a magnetic tape and a magnetic head are in one direction, whereas in the linear system, a magnetic tape and a magnetic head move relatively in both directions in the longitudinal direction of the tape.

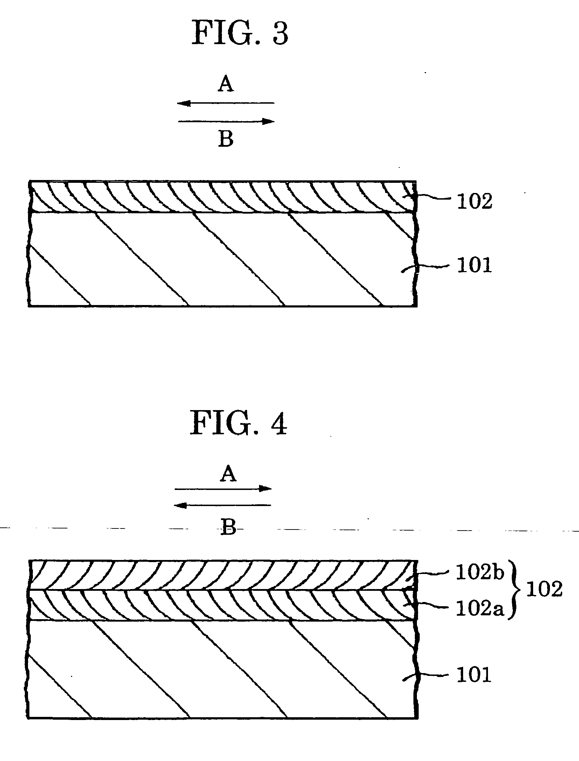

FIG. 3 is a schematic sectional view of a magnetic tape medium obtained through oblique evaporation. As shown in FIG. 3, a magnetic layer 102 is formed on a non-magnetic substrate 101. An oblique evaporated magnetic tape medium has a structure in which the easy axis of magnetization, which the recorded magnetic bit is in alignment with, is tilted relative to the plane instead of being in-plane.

Therefore, upon recording/reproducing, when the head slides forward (in the direction of arrow A) in relation to the columnar structure of the oblique evaporated film, favorable recording/reproducing characteristics are exhibited. However, when the head slides in reverse (in the direction of arrow B) in relation to the columnar structure of the oblique evaporated film, properties such as optimum recording current, phase characteristics, CN ratio, output characteristics and the like are inferior as compared to when the head slides forward, and therefore there is a disadvantage in that satisfactory recording/reproducing characteristics cannot be obtained.

Therefore, in linear systems, which carry out recording and reproducing in both directions, magnetic tape media using oblique evaporation have hardly been used. On the other hand, as a method of solving the problem that the recording/reproducing characteristics differ between cases where the head slides forward in relation to the columnar structure of an oblique evaporated film and cases where the head slides in reverse, there has been proposed a method in which the magnetic layer of an oblique evaporated tape is formed of two layers of oblique evaporated films whose directions of growth are mutually different.

FIG. 4 is a schematic sectional view of a magnetic tape medium described in patent documents 1 and 2. As shown in FIG. 4, a magnetic layer 102 comprised of two layers, namely a lower ferromagnetic metal thin film 102a and an upper ferromagnetic metal thin film 102b, is formed on a non-magnetic substrate 101. The direction of growth of the lower ferromagnetic metal thin film 102a is the opposite of the direction of growth of the upper ferromagnetic metal thin film 102b.

According to the magnetic tape described in patent documents 1 and 2, by controlling, for example, the thickness of the lower ferromagnetic metal thin film and the upper ferromagnetic metal thin film, the difference in recording/ reproducing characteristics between a case where a head slides in one direction (the direction of arrow A) in relation to the columnar structure of the oblique evaporated film and a case where the head slides in the reverse direction (the direction of arrow B) is reduced.

The magnetic tape of patent documents 1 and 2 is suitable for portable micro-recording/reproducing systems for which miniaturization and lightness are demanded. Along with the miniaturization of the cassette, high density recording and the ability to record over long durations are demanded of magnetic tapes for micro-recording/reproducing systems. To that end, by the adoption of oblique evaporated tapes, high density recording is made possible, and by sliding a head in both directions in relation to the length of a tape, recording/reproducing is carried out in both directions of the tape, and longer recording times are realized.

[Patent Document 1]
Japanese Patent Application Publication No. Hei-4-353621
[Patent Document 2]
Japanese Patent Application Publication No. Hei-4-353622
[Non-Patent Document 1]
"Magneto-Resistive Heads: Fundamentals and Applications (Electromagnetism Series)" John C. Mallinson, Academic Press

SUMMARY OF THE INVENTION

However, oblique evaporated magnetic tape media whose recording/reproducing characteristics in both directions are improved by the method above are not designed for use with high sensitivity MR heads, and are suitable for MIG (metal-in-gap) heads. In the magnetic recording medium of patent documents 1 and 2, the total thickness of the magnetic layer comprised of the two layers of oblique evaporated films is 160 to 200 nm.

When an MR head is used on a magnetic tape in which a magnetic layer of such a thickness is formed, saturation of the MR head occurs. Further, high sensitivity GMR heads cannot be used either. Therefore, in trying to realize a linear magnetic tape recording system combining a high sensitivity MR head (or GMR head) and an oblique evaporated magnetic tape medium capable of high density recording, the magnetic tape described in patent documents 1 and 2 cannot be used.

The magnetic recording medium described in patent documents 1 and 2 is such that the thickness $\delta_1$ of the first ferromagnetic metal thin film formed on the non-magnetic substrate and the thickness $\delta_2$ of the second ferromagnetic metal thin film formed on the first ferromagnetic metal thin film satisfy the relationship expressed by equation (1) below.

$$1/3 \leq \delta_2/\delta_1 \leq 2/3 \quad ...(1)$$

However, if the total thickness of the magnetic layer is reduced to, for example, 40 nm so that a high sensitivity MR head or GMR head can be used, the thickness of the upper ferromagnetic metal thin film becomes approximately 10 nm. As a result, the magnetic properties of the upper ferromagnetic metal thin film drop dramatically, and the contribution of the lower ferromagnetic thin film to the overall magnetic properties of the magnetic layer as a whole tends to become excessive. Therefore, cases arise where the difference in recording/reproducing characteristics between the two directions cannot be improved under the condition expressed by equation (1) above.

In addition, the coercivity Hc of the magnetic layer, as a whole, of the magnetic recording medium described in patent documents 1 and 2 satisfies the condition expressed by equation (2) below.

$$Hc \leq 1200 \ (Oe) \ ...(2)$$

In general, in magnetic recording media, it is preferable that the coercivity Hc be higher in order to increase reproduced output. When the magnetic layer is made thinner, coercivity Hc decreases. Therefore, when the magnetic layer is made thinner in the magnetic recording medium disclosed in patent documents 1 and 2, coercivity Hc decreases further below 1200 (Oe) (approximately equal to 96 (kA/m)). Therefore, reproduced output will be insufficient.

In addition, in order to carry out high density recording, there is a need to shorten the recording wavelength, but since this leads to a reduction in reproduced output, it is necessary to secure sufficient coercivity Hc. In the examples in patent documents 1 and 2, the recording wavelength is 0.67 $\mu$m. However, in recording/reproducing systems employing MR heads, recording/reproducing is carried out with a wavelength shorter than 0.67 $\mu$m, such as 0.3 $\mu$m for example. Therefore, the coercivity Hc has to be higher than the condition expressed by equation (2).

In a micro-recording/reproducing system that uses the magnetic tape disclosed in patent documents 1 and 2, there is a need to perform recording with a low recording current due to power constraints, and the coercivity Hc is limited to the value expressed by equation (2). On the other hand, for use in data storage, which is one of the suggested uses for linear magnetic recording tape systems, because there are not as many volume and power constraints for the recording/reproducing system, it is preferable that the coercivity Hc be made higher.

As described above, in an oblique evaporated tape with which recording/reproducing is carried out in both directions, due to the anisotropic columnar structure of the oblique evaporated films, there is a problem which is that recording/reproducing characteristics differ depending on the direction in which a head slides. Not only is the conventional magnetic recording medium, in which two layers of oblique evaporated films having different directions of growth are layered, not suitable for reproducing with MR heads or GMR heads, but reproduced output also decreases dramatically if the magnetic layer is made thinner or the recording wavelength shorter. In other words, with a conventional recording medium, in which two layers of oblique evaporated films having mutually different directions of growth are layered, high density recording/reproducing cannot be carried out in a linear magnetic recording/reproducing system that uses an MR head or the like.

The present invention is made in view of the problems above, and provides a magnetic recording medium that allows for high density recording and which is suitable for reproducing signals using a magnetoresistive head and for linear recording/reproducing

The present invention provides a magnetic recording medium in accordance with independent claim 1. Preferred embodiments of the invention are reflected in the dependent claims.

The claimed invention can be better understood in view of the embodiment of a magnetic recording medium described hereinafter. In general, the described embodiments describe preferred embodiments of the invention. The attentive reader will note, however, that some aspects of the described embodiments extend beyond the scope of the claims. To the respect that the described embodiments indeed extend beyond the scope of the claims, the described embodiments are to be considered supplementary background information and do not constitute definitions of the invention *per se*. This also holds for the subsequent "Brief Description of the Drawings" as well as the "Description of the Preferred Embodiments."

An embodiment of a magnetic recording medium related to the present invention may be comprised of a tape-shaped non-magnetic substrate, and a magnetic layer having an oblique columnar structure and which is formed through a vacuum thin film forming technique on a principal surface of the non-magnetic substrate mentioned above, where the magnetic layer mentioned above has a first ferromagnetic metal thin film, and a second ferromagnetic metal thin film formed on the first ferromagnetic metal thin film mentioned above and whose direction of growth of the oblique columnar structure is in the direction opposite to that of the first ferromagnetic metal thin film mentioned above. Mr·$\delta$, which is the product of the residual magnetization Mr and the thickness $\delta$ of the magnetic layer mentioned above, is within the range 3 (mA) $\leq$ Mr·$\delta$ < 30 (mA). The thickness $d_1$ of the first ferromagnetic metal thin film mentioned above and the thickness $d_2$ of the second ferromagnetic metal thin film mentioned above has such a relationship where 40 (nm) $\leq d_1 + d_2 \leq$ 100 (nm), and $1/2 \leq d_2/d_1 \leq 1$. The coercivity Hc of the magnetic layer mentioned above satisfies Hc $\geq$ 100 (kA/m).

By keeping the product Mr·$\delta$ of the residual magnetization Mr and the thickness $\delta$ of the magnetic layer within the range mentioned above, an MR head or GMR head can be prevented from saturating while reproducing signals, and it becomes possible to reproduce signals using high sensitivity MR heads and GMR heads. In addition, by keeping the overall thickness $\delta$ (which is $d_1 + d_2$) of the magnetic layer within the range mentioned above, Mr·$\delta$ can be kept within the range above.

By keeping the ratio $d_2/d_1$ of the thicknesses of the two layers of ferromagnetic films within the range above, the difference in recording/reproducing characteristics between the two directions for performing linear recording/reproducing can be reduced. By keeping the coercivity Hc of the magnetic layer within the range mentioned above, the required reproduced output can be obtained. High density recording is made possible by adopting the magnetic recording medium of the present invention in various linear magnetic recording/reproducing systems including those for use in tape streamers.

According to a preferred embodiment, Mr·$\delta$ satisfies 12(mA)$\leq$Mr·$\delta$<30(mA), and Recorded signals are reproduced with a magnetoresistive head. Alternatively said Mr·$\delta$ satisfies 3(mA)$\leq$Mr·$\delta$<12(mA), and recorded signals are reproduced with a giant magnetoresistive head.

Brief Description of the Drawings

FIG. 1 is a sectional view of a magnetic recording medium of the present invention;
FIG. 2 is a schematic view showing a vacuum deposition apparatus for forming the magnetic layer of a magnetic recording medium of the present invention;
FIG. 3 is a sectional view of a conventional magnetic recording medium;
FIG. 4 is a sectional view of a conventional magnetic recording medium; and
FIG. 5 is a table of the various examples and comparative examples of magnetic tapes.

DESCRIPTION OF THE PREFERRED EMBODIMENTS

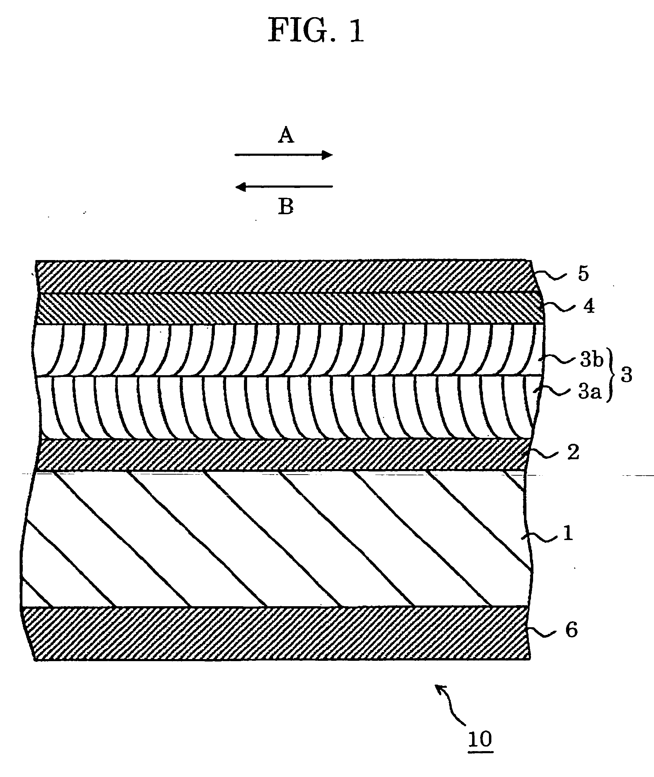

Hereinafter, embodiments of the present invention are described with reference to the drawings. A schematic sectional view of an example of a magnetic recording medium related to the present invention is shown in FIG. 1. As shown in FIG. 1, a magnetic recording medium 10 has a configuration in which a foundation layer 2 and a magnetic layer 3 and a protective layer 4 are sequentially formed on a tape-shaped non-magnetic substrate 1. The magnetic layer 3 has two layers, namely a lower ferromagnetic metal thin film 3a and an upper ferromagnetic metal thin film 3b.

As needed, a lubricant layer 5 may also be formed on the protective layer 4 with a predetermined lubricant. In addition, a back coat layer 6 may be formed on the non-magnetic substrate 1 on the side opposite the side on which the magnetic layer 3 is formed.

The magnetic layer 3 of the magnetic recording medium 10 is formed through oblique evaporation, and has an oblique columnar structure. The lower ferromagnetic metal thin film 3a and the upper ferromagnetic metal thin film 3b have mutually opposing growth directions, and the thickness of these ferromagnetic metal thin films 3a and 3b are kept within a predetermined range. Thus, the difference in recording/reproducing characteristics between a case where a head and the magnetic recording medium 10 are, relatively, moved in one direction in the longitudinal direction of the magnetic recording medium 10 (the direction of arrow A) to carry out recording/reproducing and a case where they are, relatively, moved in the other direction (the direction of arrow B) to carry out recording/reproducing is reduced.

Next, each of the layers constituting the magnetic recording medium 10 above is described in detail.

For the non-magnetic substrate 1, any known material used for conventional magnetic tapes may be used.

Examples of such a material would include polyesters, such as polyethylene terephthalate (PET), polyethylene naphthalate (PEN) and the like, polyolefins, such as polyethylene, polypropylene and the like, cellulose derivatives such as cellulose triacetate and the like, and plastics such as polycarbonate, polyimide, polyamide, polyamide-imide and the like.

The foundation layer is provided as needed for the purpose of improving the durability and the running characteristics of the ultimately obtained magnetic recording medium 10 and for improving handling at the time of magnetic tape film formation. For example, it is also possible to form fine bumps and dents or to enhance mechanical strength by forming the foundation layer 2 with a coating that contains a binder resin, a filler, a surfactant and the like.

Examples of the binder resin for forming the foundation layer 2 include water soluble polyester resins, water soluble acrylic resins, water soluble polyurethane resins and the like. As the filler, particles of heat resistant polymers, and particles of silicon dioxide, calcium carbonate and the like may be used, for example. It is preferable that the average particle diameter of the filler be 5 to 30 nm, and that the density of the surface protrusions formed by the filler be 500,000 to 30,000,000/mm$^2$.

The average particle diameter of the filler of the foundation layer 2 and the density of the surface protrusions formed by the filler can be set as deemed appropriate within a range in which the running durability and the electromagnetic conversion characteristics of the ultimately obtained magnetic recording medium 10 are favorable. Alternatively, dents and bumps may be artificially formed on the non-magnetic substrate 1 through lithography, or fine protrusions comprised of metals, inorganic compounds or organic polymers may be formed through plating or vacuum thin film forming techniques.

The magnetic layer 3 is formed through a vacuum deposition method in which a ferromagnetic metal material is heated, evaporated and deposited in a vacuum. Oblique deposition (evaporation), in which the tape-shaped non-magnetic substrate 1 is run in its longitudinal direction, and the magnetic layer 3 is formed by depositing fine magnetic particles on a principal surface of the running non-magnetic substrate 1, has such advantages as having favorable film forming characteristics, high productivity and being easy to operate.

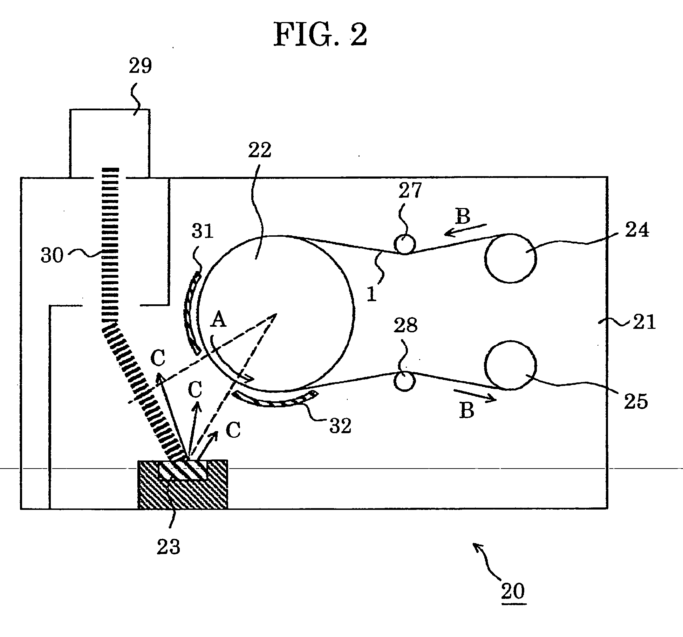

As a vacuum deposition apparatus for forming the magnetic layer 3, a continuous take-up vacuum deposition apparatus 20 as shown in FIG. 2 may be used. A vacuum chamber 21 of the vacuum deposition apparatus 20 is configured for oblique deposition, and is vacuumized inside to approximately 1 × 10$^{-3}$ Pa. A cooling can 22 and an evaporation source 23 are provided inside the vacuum chamber 21. The cooling can 22 is cooled to, for example, approximately -20°C, and rotates in the direction indicated by arrow A in the diagram. The evaporation source 23 is so placed as to face the cooling can 22.

A supply roll 24 and a take-up roll 25 are provided in the vacuum chamber 21. The non-magnetic substrate 1 on which the foundation layer 2 (see FIG. 1) is already formed is fed from the supply roll 24 in the direction indicated by arrow B in the diagram, and is taken up by the take-up roll 25 after it has run along the surface of the cooling can 22.

Between the supply roll 24 and the cooling can 22, and between the cooling can 22 and the take-up roll 25 are provided, respectively, guide rollers 27 and 28. The guide roller 27 adjusts the tension in the non-magnetic substrate 1 running between the supply roll 24 and the cooling can 22. The guide roller 28 adjusts the tension in the non-magnetic substrate 1 running between the cooling can 22 and the take-up roll 25. Thus, the non-magnetic substrate 1 runs smoothly.

The evaporation source 23 is something in which a ferromagnetic metal material such as Co and the like is placed in a container such as a crucible, and an electron beam generation source 29 for heating and evaporating the ferromagnetic metal material of the evaporation source is provided in the vacuum deposition apparatus 20. Through accelerated irradiation of an electron beam 30 from the electron beam generation source 29 onto the ferromagnetic metal material of the evaporation source 23, the ferromagnetic metal material of the evaporation source 23 evaporates as indicated by arrow C in the diagram. The ferromagnetic metal material is deposited on the non-magnetic substrate 1 running along the surface of the cooling can 22 facing the evaporation source 23, and thus a ferromagnetic metal thin film is formed.

There are provided a first shutter 31 and a second shutter 32 between the evaporation source 3 and the cooling can 22. The first shutter 31 is located upstream of the running non-magnetic substrate 1, and the second shutter 32 is located downstream of the running non-magnetic substrate 1. The first shutter 31 and the second shutter 32 expose to the atmosphere, in which the ferromagnetic metal material is evaporated, only a predetermined area of the non-magnetic substrate 1 running along the surface of the cooling can 22. In other words, the first shutter 31 and the second shutter 32 limit the incident angle of the ferromagnetic metal material gas relative to the non-magnetic substrate 1.

In depositing the ferromagnetic metal thin film, oxygen gas is fed through an oxygen gas inlet (not shown) to a portion near the surface of the non-magnetic substrate 1 and where the ferromagnetic metal material is incident. Thus, oxygen is introduced into the magnetic layer that is formed. By controlling the oxidation of the magnetic layer in an appropriate manner, the magnetic properties, durability and weather resistance of the ferromagnetic metal thin film can be improved. In addition, instead of the heating means that utilizes electronic beams as mentioned above, known means such as resistance heating means, high frequency heating means, laser heating means and the like may be used.

In the vacuum deposition apparatus 20 having the configuration above, the ferromagnetic metal material is evaporated from the evaporation source, while at the same time the non-magnetic substrate 1 is run along the surface of the cooling can 22. The evaporated ferromagnetic metal material is deposited only on the portion that is exposed from between the first shutter 31 and the second shutter 32.

Because the vacuum deposition apparatus 21 runs the non-magnetic substrate 1 from the first shutter 31 side to the second shutter 32 side, the evaporated ferromagnetic metal material is first deposited on the non-magnetic substrate 1 towards the first shutter 31 side. Then, as the non-magnetic substrate 1 runs towards the second shutter 32 side from the first shutter 31 side, the evaporated ferromagnetic metal material is gradually deposited. Therefore, a magnetic layer formed in the method described above where the incident angle of the fine magnetic particles is controlled is characteristic in that it takes on an oblique structure.

The magnetic layer 3 of an oblique evaporated tape related to the present invention suitable for use in a linear magnetic recording tape system that uses a high sensitivity MR head has such a structure that the inclination of the oblique columnar structure of the lower ferromagnetic metal thin film 3a is the opposite of the inclination of the oblique columnar structure of the upper ferromagnetic metal thin film 3b.

In order to obtain the structure mentioned above for the magnetic layer 3, first, the lower ferromagnetic metal thin film 3a is formed by performing oblique evaporation while running a roll of the non-magnetic substrate 1, and winding it in another roll (see the take-up roll 25 in FIG. 2). Then the wound roll is switched with the supply roll 24, and oblique evaporation is performed again as shown in FIG. 2. Thus, the upper ferromagnetic metal thin film 3b whose direction of the oblique columnar structure is different from that of the lower ferromagnetic metal thin film 3a is formed.

In addition, a magnetic recording medium of an embodiment of the present invention is to be used for a recording/reproducing apparatus having an MR head or a GMR head, and in order to reduce noise and improve the C/N ratio, it is preferable that the magnetic layer 3 be formed extremely thin. Therefore, the magnetic layer 3 is made to be 40 to 100 nm in thickness.

When the thickness of the magnetic layer 3 is below 40 nm, due to the thinness of the magnetic layer 3, crystal growth is hindered, and sufficient magnetic properties for obtaining a high C/N ratio cannot be obtained. In addition, when the magnetic layer 3 is formed to be thicker than 100 nm, saturation of heads becomes prominent, and cases where the desired recording density cannot be achieved when an MR head or a GMR head is used may be encountered.

Further, when the ratio $d_2/d_1$ of the thickness $d_1$ of the lower ferromagnetic metal thin film 3a and the thickness $d_2$ of the upper ferromagnetic metal thin film 3b is less the 1/2, the proportion of signals from the lower ferromagnetic metal thin film 3a becomes greater, and the difference in signal output at longer wavelengths between cases where recording/reproducing is carried out in the forward direction and in the reverse direction becomes greater. In addition, when $d_2/d_1$ becomes greater than 1, the proportion of signals from the upper ferromagnetic metal thin film 3b becomes greater, and the difference in signal output at shorter wavelengths between cases where recording/reproducing is carried out in the forward direction and in the reverse direction becomes greater

As the ferromagnetic metal material for forming the magnetic layer 3, any known metal material or magnetic alloy ordinarily used in this sort of magnetic recording medium may be used. Examples of such would include such materials as ferromagnetic metals such as Co, Ni and the like, Co-Ni alloys, Co-Fe alloys, Co-Ni-Fe alloys, Co-Cr alloys, Co-Pt alloys, Co-Pt-B alloys, Co-Cr-Ta alloys, Co-Cr-Pt-Ta alloys, or a material in which one of these materials is formed in a film in an oxygen atmosphere so that oxygen is contained in the film, or a material in which one or two other elements are made to be contained in one of the materials above.

In the magnetic recording medium 10 of the present embodiment, besides the foundation layer 2 between the magnetic layer 3 and the non-magnetic substrate 1, there may be formed, using a vacuum thin film forming technique, an intermediate layer (not shown) in order to make the crystal particles in the magnetic layer 3 finer and improve their orientation.

Vacuum thin film forming techniques which may be employed include, for example, the vacuum evaporation method in which a predetermined material is heated and evaporated in a vacuum and deposited, the ion plating method in which evaporation of a predetermined material is carried out under electric discharge, the physical vapor deposition (PVD) method such as sputtering in which glow discharge is caused in an atmosphere whose main component is argon and atoms at the surface of a target are sputtered with argon ions, and the like.

Materials that may be used for the intermediate layer include, for example, metal materials such as Co, Cu, Ni, Fe, Zr, Pt, Au, Ta, W, Ag, Al, Mn, Cr, Ti, V, Nb, Mo, Ru and the like, as well as alloys that combine any two or more of these metal materials, or compounds of these metal materials and oxygen or nitrogen, compounds such as silicon dioxide, silicon nitride, ITO (indium tin oxide), $In_2O_3$, ZrO and the like, carbon, diamond-like carbon and the like.

On the magnetic layer 3 must be formed the protective layer 4 comprised of diamond-like carbon in order to secure favorable running durability and corrosion resistance. The protective layer 4 may be formed through CVD (Chemical Vapor Deposition) using, for example, a plasma CVD continuous film forming apparatus.

Any of the known CVD methods such as the mesh electrode DC plasma method, electron beam excitation plasma source method, cold cathode ion source method, ionization deposition method, catalytic CVD method and the like may be used. Any of the known materials for use as a carbon compound in CVD methods such as hydrocarbons, ketones, alcohols and the like may be used. In addition, during plasma generation, Ar, $H_2$ or the like may be fed as a gas for promoting the decomposition of the carbon compounds.

In order to improve running performance, the lubricant layer 5 may be formed on the protective layer 4 by applying any perfluoro polyether lubricant, for example.

In addition, in order to improve running performance and prevent static build-up and the like, the back coat layer 6 is formed on the non-magnetic substrate 1 on the side opposite the side on which the magnetic layer 3 is formed.

It is preferable that the thickness of the back coat layer 6 be approximately 0.2 to 0.7 μm. By, for example, preparing a back coating material by dispersing solid particles, such as inorganic pigments and the like, in a binder, and mixing it with an organic solvent that matches the binder, and then applying this coating material onto the non-magnetic substrate 1, the back coat layer 6 may be formed.

The magnetic recording medium 10 of the present embodiment made in the manner described above is suitable for use as a magnetic recording medium for a linear magnetic recording tape system that uses an MR head. As used herein, MR head refers to a magnetic head for reproduction only that detects signals from magnetic recording media using magnetoresistive effects. In general, MR heads have higher sensitivity and larger reproduced output as compared to inductive magnetic heads which carry out recording/reproducing utilizing electromagnetic inductance, and are therefore suitable for use with high density magnetic recording media.

An MR head has an MR element of an approximately rectangular shape that is held between a pair of magnetic shields, which are made of a soft magnetic material such as Ni-Zn polycrystalline ferrite for example, through an insulating material. In addition a pair of terminals are drawn out from both ends of the MR element, and a sense current can be supplied to the MR element via these terminals.

When signals from a magnetic recording medium are reproduced using an MR head, the MR element is slid against the magnetic recording medium. Then, under these circumstances, a sense current is supplied to the MR element via the terminals connected to both ends of the MR element, and changes in the voltage of this sense current are detected.

When a sense current is supplied to the MR element while the MR element is sliding against the magnetic recording medium, the direction of magnetization of the MR element changes according to the magnetic field from the magnetic recording medium, the relative angle between the sense current supplied to the MR element and the direction of magnetization changes, and the value of resistance changes depending on the relative angle formed between the direction of magnetization of the MR element and the sense current.

Thus, by keeping the value of the sense current supplied to the MR element constant, changes occur in the voltage of the sense current. By detecting these changes in the voltage of the sense current, the magnetic field of the signals from the magnetic recording medium is detected, and the signals recorded on the magnetic recording medium are reproduced. In addition, as the reproducing magnetic head, so-called giant magnetoresistive heads (GMR heads) may also be used.

In order to apply a bias magnetic field to the MR element, besides the SAL (soft adjacent layer) biasing method, various other methods such as, for example, the permanent magnet biasing method, the shunt current biasing method, the self biasing method, exchange biasing method, the barber pole method, the divided element method, the servo biasing method, and the like may be adopted. Non-patent document 1 mentioned above discloses a giant magnetoresistive element and the various biasing methods in detail.

[Examples]

Hereinafter, specific examples of magnetic recording media related to the present invention are described based on experiment results.

[Example 1]

As the non-magnetic substrate 1, a polyethylene terephthalate (PET) film of a thickness of 8.0 μm and a width of 150 mm was prepared.

A foundation layer 2 of a thickness of 5 nm was formed on this non-magnetic substrate 1 on the side on which the magnetic layer is to be formed. The foundation layer 2 was formed by applying a coating onto the non-magnetic substrate 1, where the coating had silica particles dispersed in water soluble latex whose main component was acrylic ester. The silica particles had a diameter of 10 nm, and the density of the silica particles on the non-magnetic substrate 1 was controlled to approximately $1 \times 10^7/mm^2$.

Next, the magnetic layer 3 was formed using the vacuum deposition apparatus 20 shown in FIG. 2. Co was used as the metal magnetic material, oxygen was fed from the oxygen gas inlet at $6.0 \times 10^{-4}$ m³/min, electron beam 30 was irradiated from the electron beam generation source 29 to heat the metal magnetic material, and a Co-CoO magnetic layer was formed through reactive vacuum evaporation.

The formation of the magnetic layer 3 was divided into two parts, namely the formation of the lower ferromagnetic metal thin film 3a and the formation of the upper ferromagnetic metal thin film 3b. The thickness $d_1$ of the lower ferro-

magnetic metal thin film 3a was 50 nm, and the thickness $d_2$ of the upper ferromagnetic metal thin film 3b was 25 nm. The minimum incident angle and the maximum incident angle of the evaporated Co particles were adjusted to 45° and 70°, respectively, by the first shutter 31 and the second shutter 32.

The protective layer 4 comprised of diamond-like carbon was formed in a thickness of 10 nm through plasma CVD on the magnetic layer 3 formed in the manner described above. Further, a perfluoro polyether lubricant was applied onto the protective layer 4 and the lubricant layer 5 of a thickness of 2 nm was formed.

In addition, a back coating containing carbon particles and urethane resin was applied onto the non-magnetic substrate 1 on the side opposite the side on which the magnetic layer 3 was formed, and the back coat layer 6 of a thickness of 0.5 $\mu$m was formed. The carbon particles that were used had an average diameter of 20 nm. For the application of the back coating, a direct gravure coating apparatus was used. After a roll of the desired magnetic recording medium 10 was obtained through the processes above, the roll was cut into widths of 1,27 cm (1/2 inches) to obtain sample magnetic tapes.

[Examples 2 through 5] and [Comparative Examples 1 through 5]

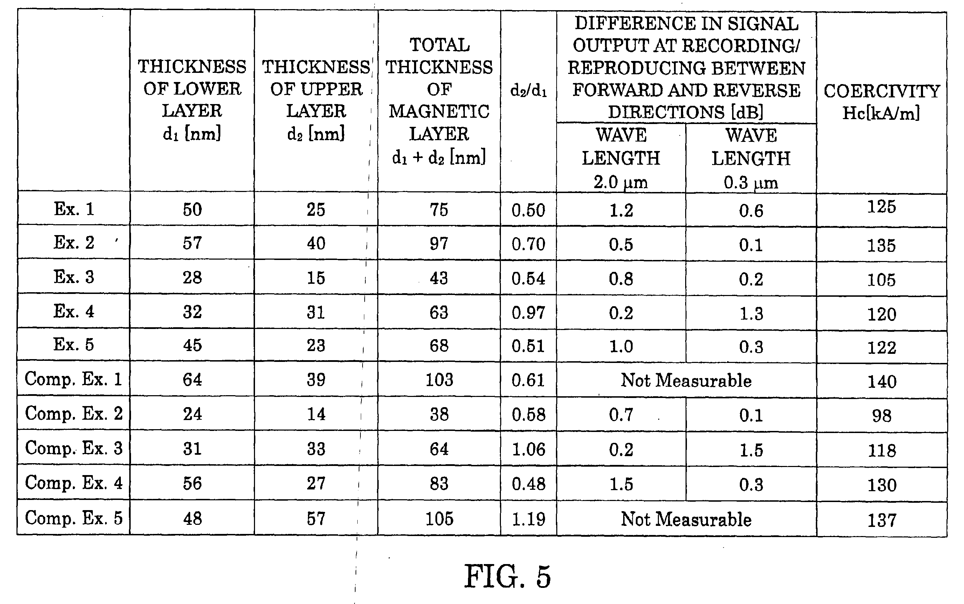

Except for changing the thickness $d_1$ of the lower ferromagnetic metal thin film 3a and the thickness $d_2$ of the upper ferromagnetic metal thin film 3b above as shown in FIG. 5, magnetic tapes were produced in a manner similar to example 1.

Electromagnetic conversion characteristics and magnetic properties of each sample magnetic tape made in the manner described above were evaluated in the method described below. Specifically, for the evaluation of the electromagnetic conversion characteristics, a drum tester was used. A MIG head having a gap length of 0.22 $\mu$m and a track width of 20 $\mu$m was used as a recording head. In evaluating electromagnetic conversion characteristics, recording was carried out with the MIG head at recording wavelengths of 2.0 $\mu$m and 0.3 $\mu$m, and the carrier output when reading was carried out using a NiFe MR head of a track width of 5 $\mu$m was measured.

The magnetic tape and the magnetic head were moved, relatively, in the forward direction and the reverse direction, and measurements were taken with respect to both directions. The recording current of the recording head was set to a value at which the reproduced output measured for each sample in the forward direction was largest, and the same recording current was used in taking measurements in the reverse direction. In addition, the relative speed between the magnetic tape and the MR head was 7 m/sec. Magnetic properties were measured using a vibrating sample magnetometer (VSM). The coercivity when measurements were taken in-plane and in the longitudinal direction of the tape was evaluated.

As shown in FIG. 5, the total thickness $d_1 + d_2$ of the magnetic layer 3 of the magnetic tapes of examples 1 through 5 falls within the range of 40 to 100 nm, and $d_2/d_1$, which is the ratio between the thickness $d_1$ of the lower ferromagnetic metal thin film 3a and the thickness $d_2$ of the upper ferromagnetic metal thin film 3b satisfies $1/2 \leq d_2/d_1 \leq 1$. With the magnetic tapes of examples 1 through 5, the difference in signal output between when recording/reproducing was performed in the forward direction and in the reverse direction was equal to or less than 1.4 dB in both the case where the recording wavelength was 2.0 $\mu$m as well as the case where the recording wavelength was 0.3 $\mu$m, thus exhibiting favorable recording/reproducing characteristics in both directions.

On the other hand, in comparative examples 1 and 5, the total thickness $d_1 + d_2$ of the magnetic layer 3 exceeds 100 nm. In comparative examples 1 and 5, signal output is large, causing the MR head to saturate, and accurate measurements could not be obtained. As for the thickness ratio $d_2/d_1$, comparative example 1 satisfies $1/2 \leq d_2/d_1 \leq 1$, and comparative example 5 exceeds 1, however, accurate measurements could not be obtained for either of them.

The total thickness $d_1 + d_2$ of the magnetic layer 3 of comparative example 2 is less than 40 nm. In comparative example 2, the coercivity, which represents magnetic properties, becomes less than 100 kA/m, and properties suitable for a magnetic recording medium could not be obtained.

In comparative example 3, the thickness ratio $d_2/d_1$ exceeds 1. In comparative example 3, the effect the upper ferromagnetic metal thin film 3b has on signal output difference became more significant, causing the signal output difference at the recording wavelength of 0.3 $\mu$m to become 1.5 dB, and a medium suitable for recording in both directions could not be obtained.

In comparative example 4, the thickness ratio $d_2/d_1$ is less than 1/2. In comparative example 4, the effect the lower ferromagnetic metal thin film 3a has on signal output difference became more significant, causing the signal output difference at the recording wavelength of 2.0 $\mu$m to become 1.5 dB, and a medium suitable for recording in both directions could not be obtained.

As described above, according to a magnetic tape of an embodiment of the present invention, the difference in recording/reproducing characteristics between the two directions caused by a difference in the directions of growth of the two layers of oblique evaporated films is reduced.

Therefore, in a magnetic tape of the present embodiment, high density recording/reproducing can be carried out in a linear magnetic recording/reproducing system that uses an MR head or the like.

Since the invention disclosed herein may be embodied in other specific forms some of which forms have been indicated, the embodiments described herein are to be considered in all respects illustrative and not restrictive. The scope of the invention is to be indicated by the appended claims, rather than by the foregoing description, and all changes which come within the meaning and range of equivalents of the claims are intended to be embraced therein.

**Claims**

1. A magnetic recording medium for high density recording/reproducing with a wavelength shorter than 0.67 $\mu$m, comprising:

   a tape-shaped non-magnetic substrate (1); and
   a magnetic layer (3) having an oblique columnar structure formed through a vacuum thin film forming technique on a surface of said non-magnetic substrate, wherein

   said magnetic layer (3) includes a first ferromagnetic metal thin film (3a), and a second ferromagnetic metal thin film (3b) formed on said first ferromagnetic metal thin film and whose direction of growth of its oblique columnar structure is opposite that of said first ferromagnetic metal thin film,
   thickness $d_1$ of said first ferromagnetic metal thin film (3a) and thickness $d_2$ of said second ferromagnetic metal thin film (3b) satisfy 40 (nm)$\leq d_1 + d_2 \leq$ 100 (nm) to prevent from saturation while reproducing signals as well as $1/2 \leq d_2/d_1 \leq 1$, and
   coercivity Hc of said magnetic layer (3) satisfies Hc $\geq$ 100 (kA/m).

2. The magnetic recording medium according to claim 1, said magnetic recording medium being adapted to reproduce signals with a magnetoresistive head.

3. The magnetic recording medium according to claim 1, further comprising a plurality of tracks arranged in parallel in the longitudinal direction of said magnetic recording medium, wherein recording and reproducing of signals is performed in a linear method.

4. The magnetic recording medium according to claim 1, further comprising a protective layer (4) on said magnetic layer.

5. The magnetic recording medium according to claim 4, wherein said protective layer (4) includes a diamond-like carbon film.

**Patentansprüche**

1. Magnetisches Aufzeichnungsmittel zum Auszeichnen/Wiedergeben bei hoher Dichte mit einer Wellenlänge kleiner als 0.67$\mu$m, umfassend:

   ein bandförmiges nichtmagnetisches Substrat (1); und
   eine magnetische Schicht (3) mit einer schiefen, kolumnaren Struktur, die mit einer Dünnschichtvakuumtechnik auf einer Oberfläche des nichtmagnetischen Substrats ausgebildet ist, wobei

   die magnetische Schicht (3) einen ersten ferromagnetischen, metallischen Dünnfilm (3a) und einen zweiten ferromagnetischen, metallischen Dünnfilm (3b) aufweist, der zweite ferromagnetische, metallische Dünnfilm auf dem ersten ferromagnetischen Dünnfilm ausgebildet ist und wobei eine Wachstumsrichtung dessen schiefer kolumnarer Struktur entgegengesetzt zu derjenigen des ersten ferromagnetischen, metallischen Dünnfilms liegt,
   eine Dicke $d_1$ des ersten ferromagnetischen, metallischen Dünnfilms (3a) und eine Dicke $d_2$ des zweiten ferromagnetischen, metallischen Dünnfilms (3b) die Beziehung 40 (nm)$\leq d_1 + d_2 \leq$ 100 (nm) zur Vermeidung einer Sättigung während der Signalwiedergabe als auch $1/2 \leq d_2/d_1 \leq 1$ erfüllen, und
   eine Koerzitivität Hc der magnetischen Schicht (3) Hc $\geq$ 100 (kA/m) erfüllt.

2. Magnetisches Aufzeichnungsmittel nach Anspruch 1, wobei das magnetische Aufzeichnungsmittel zur Wiedergabe von Signalen mit einem magnetoresistiven Kopf geeignet ist.

3. Magnetisches Aufzeichnungsmittel nach Anspruch 1, das zusätzlich eine Mehrzahl von in der longitudinalen Richtung des magnetischen Aufzeichnungsmittels parallel angeordneten Spuren aufweist, wobei ein Aufzeichnen und Wiedergeben von Signalen mit einem linearen Verfahren erfolgt.

4. Magnetisches Aufzeichnungsmittel nach Anspruch 1, das zusätzlich eine Schutzschicht (4) auf der magnetischen Schicht aufweist.

5. Magnetisches Aufzeichnungsmittel nach Anspruch 4, wobei die Schutzschicht (4) einen Diamant-ähnlichen Kohlenstofffilm aufweist.

**Revendications**

1. Support d'enregistrement magnétique pour enregistrement/reproduction haute densité avec une longueur d'onde plus courte que 0,67 $\mu$m, comprenant :

   un substrat non magnétique en forme de bande (1) ; et
   une couche magnétique (3) ayant une structure columnaire oblique formé par l'intermédiaire d'une technique de formation de film mince sous vide sur une surface dudit substrat non magnétique,

   dans lequel
   ladite couche magnétique (3) comprend un premier film mince métallique ferromagnétique (3a), et un deuxième film mince métallique ferromagnétique (3b) formé sur ledit premier film mince métallique ferromagnétique et dont la direction de croissance de sa structure columnaire oblique est opposée à celle dudit premier film mince métallique ferromagnétique,
   l'épaisseur $d_1$ dudit premier film mince métallique ferromagnétique (3a) et l'épaisseur $d_2$ dudit deuxième film mince métallique ferromagnétique (3b) satisfaisant à 40 (nm) $\leq d_1 + d_2 \leq$ 100 (nm) pour empêcher une saturation tout en reproduisant des signaux, ainsi que $1/2 \leq d_2/d_1 \leq 1$, et
   la coercitivité Hc de ladite couche magnétique (3) satisfait à Hc $\geq$ 100 k(A/m).

2. Support d'enregistrement magnétique selon la revendication 1, ledit support d'enregistrement magnétique étant adapté pour reproduire des signaux avec une tête magnétorésistive.

3. Support d'enregistrement magnétique selon la revendication 1, comprenant en outre une pluralité de pistes agencées en parallèle dans la direction longitudinale dudit support d'enregistrement magnétique, dans lequel l'enregistrement et la reproduction de signaux sont réalisées selon un procédé linéaire.

4. Support d'enregistrement magnétique selon la revendication 1, comprenant en outre une couche protectrice (4) sur ladite couche magnétique.

5. Support d'enregistrement magnétique selon la revendication 4, dans lequel ladite couche protectrice (4) comprend un film de carbone analogue à du diamant.

# FIG. 1

# FIG. 2

# FIG. 3

A

B

~ 102

~ 101

# FIG. 4

A

B

~ 102b
} 102
~ 102a

~ 101

| | THICKNESS OF LOWER LAYER $d_1$ [nm] | THICKNESS OF UPPER LAYER $d_2$ [nm] | TOTAL THICKNESS OF MAGNETIC LAYER $d_1 + d_2$ [nm] | $d_2/d_1$ | DIFFERENCE IN SIGNAL OUTPUT AT RECORDING/ REPRODUCING BETWEEN FORWARD AND REVERSE DIRECTIONS [dB] | | COERCIVITY $Hc$[kA/m] |
|---|---|---|---|---|---|---|---|
| | | | | | WAVE LENGTH 2.0 μm | WAVE LENGTH 0.3 μm | |
| Ex. 1 | 50 | 25 | 75 | 0.50 | 1.2 | 0.6 | 125 |
| Ex. 2 | 57 | 40 | 97 | 0.70 | 0.5 | 0.1 | 135 |
| Ex. 3 | 28 | 15 | 43 | 0.54 | 0.8 | 0.2 | 105 |
| Ex. 4 | 32 | 31 | 63 | 0.97 | 0.2 | 1.3 | 120 |
| Ex. 5 | 45 | 23 | 68 | 0.51 | 1.0 | 0.3 | 122 |
| Comp. Ex. 1 | 64 | 39 | 103 | 0.61 | Not Measurable | | 140 |
| Comp. Ex. 2 | 24 | 14 | 38 | 0.58 | 0.7 | 0.1 | 98 |
| Comp. Ex. 3 | 31 | 33 | 64 | 1.06 | 0.2 | 1.5 | 118 |
| Comp. Ex. 4 | 56 | 27 | 83 | 0.48 | 1.5 | 0.3 | 130 |
| Comp. Ex. 5 | 48 | 57 | 105 | 1.19 | Not Measurable | | 137 |

FIG. 5